# EUROPÄISCHE PATENTSCHRIFT

(11) **EP 2 546 601 B1**
(45) Veröffentlichungstag und Bekanntmachung des Hinweises auf die Patenterteilung: **28.09.2016**
(21) Anmeldenummer: 11174087.4
(22) Anmeldetag: 15.07.2011
(51) Int. Cl.: G01B 17/00, H01L 41/08

(54) **Vorrichtung zur berührungslosen Kontrolle der Kantenlage flächiger Objekte**
Device for contactless control of the edge position of flat objects
Dispositif de contrôle sans contact de la position des bords d'objets plats

(43) Veröffentlichungstag der Anmeldung: 16.01.2013
(73) Patentinhaber: microsonic GmbH, 44263 Dortmund (DE)
(72) Erfinder: Schulte, Johannes, 59399 Olfen (DE); Wetterkamp, Jörg, 45711 Datteln (DE)
(74) Vertreter: Wickord, Wiro

(56) Entgegenhaltungen:
- WO-A1-97/08761
- DE-C1- 19 500 822
- US-A- 5 274 573
- US-A1- 2004 171 936
- US-B1- 6 289 729

## Beschreibung

Die Erfindung betrifft eine Vorrichtung zur Kontrolle einer Kantenlage flächiger Objekte, insbesondere von Bahnen aus Papier oder Folie, mit einem Ultraschall-Sendewandler und einem Ultraschall-Empfangswandler, die in einem festen Abstand gegenüberliegend zueinander angeordnet sind und eine zur Fläche des Objektes senkrechte Messtrecke bilden, durch die das zu kontrollierende Objekt mit einer Kante hindurchgeführt wird, und mit einer Steuerelektronik, die die empfangenen Ultraschallsignale aufbereitet und ein Ausgangssignal ausgibt, das der Lage der Kante in der Messstrecke proportional ist.

In vielen Bereichen der Industrie werden Flächenmaterialien wie Papier, Folien oder Bleche von der Rolle als Bahnmaterial verarbeitet. Dieses Bahnmaterial wird in den verarbeitenden Maschinen über Umlenkrollen und Zylinder geführt. Damit das Bahnmaterial in der Spur bleibt, sind einige der Umlenkrollen über Aktoren lenkbar ausgeführt, so dass die Lage des Bahnmaterials ständig nachgeregelt werden kann. Für diese Nachregelung muss die Lage der Bahnkante erfasst werden. Hierfür werden so genannte Bahnkantensensoren verwendet, die nach unterschiedlichen physikalischen Wirkprinzipien arbeiten. Gemeinsam ist allen Bahnkantensensoren, dass diese ein der Lage der Bahnkante proportionales Ausgangssignal liefern. Dies kann in Form eines Analogsignals 0-10 V oder 4-20 mA, oder eines Digitalsignals, welches über eine definierte Schnittstelle wie CAN-Bus ausgegeben wird.

Es sind verschiedenste Formen von Kantendetektoren bekannt.
Weit verbreitet sind Detektoren auf optischer Basis. So ist in der Patentanmeldung WO2004/72609 ein gabelförmiger Detektor beschrieben, der mehrere LED-Strecken mit Linsen besitzt und ein der relativen Blattkante proportionales Ausgangssignal generiert.
In der Patentschrift DE 10 2004 017 676 B4 ist eine Fehlererfassungsvornchtung für Druckbahnen beschrieben, bei der an beiden Seiten der Druckbahn gabelförmige Detektoren vorgesehen sind, die mit jeweils zwei Infrarot-Lichtschranken arbeiten.

Diese Detektoren sind relativ ungenau und sie sind nicht für transparente Druckbahnen geeignet.

In der Patentanmeldung DE 199 41 728 A1 ist ein Bogenkantendetektor beschrieben, der mit einer linearen Anordnung einer Vielzahl von Ultraschallsensoren arbeitet. Dieser Bogenkantendetektor beruht auf der unterschiedlichen Reflektion der Ultraschallsignale von dem Bogen und der Unterlage.

In der Patentanmeldung DE 11 2007 000 959 T5 ist ein gabelförmiger Detektor mit einem optischen Array und einem Ultraschall-Array zum Senden von Messsignalen und einem optischen Array und einem Ultraschall-Array zum Empfangen von Messsignalen beschrieben. Ein solcher Detektor ist sehr aufwendig, da alle optischen und Ultraschallelemente einzeln angesteuert und ausgewertet werden müssen.

Am Markt erhältliche Ultraschallwandler sind rotationssymmetrisch aufgebaut. Baut man mit diesen Ultraschallwandlern eine Sender- Empfängeranordnung auf, ist der erzielbare Messbereich diese Anordnung bestimmt von den geometrischen Abmessungen der verwendeten Ultraschallwandler. Diese kreisrunden Ultraschallwandler lassen sich im Durchmesser nicht beliebig vergrößern, da der Durchmesser die Ultraschall-Frequenz bestimmt und bei einem sehr großen Durchmesser die Ultraschall-Frequenz so niedrig liegen würde, dass dann die Gefahr bestehen würde, durch hochfrequente Geräusche aus der Umgebung gestört zu werden. Ein zu großer Durchmesser der Ultraschallwandler würde die mechanische Breite des Bahnkantensensors auch unzulässig vergrößern. Deshalb wird in der Patentschrift DE 195 00 822 C1 ein gabelförmiger Detektor mit jeweils einem aus einzelnen Ultraschallwandlern diskret aufgebauten Ultraschall-Array zum Senden und zum Empfangen von Messsignalen beschrieben, in der mehrere kreisrunde Sende-Empfangswandler nebeneinander angeordnet werden, so dass sich die einzelnen Messbereiche überschneiden und sich in der Summe ein breiter Messbereich ergibt. Nachteilig an dieser Lösung ist, dass mehrere Sende- und Empfangswandler benötigt werden und diese über eine sehr aufwändige Elektronik ausgewertet werden müssen. akustisches Anpassmaterial geklebt werden. Diese so aufgebauten Arrays werden gegenüberliegend angeordnet und von einer Elektronik im Multiplex-Verfahren angesteuert, so dass auf der Senderseite über jede kreisrunde Scheibe einzeln Ultraschall abgestrahlt und auf der Empfängerseite die Empfangssignale von jeder kreisrunden Scheibe einzeln ausgewertet werden können. Diese Lösung ist ebenfalls sehr aufwändig, da auf dem akustischen Anpassmaterial jeweils mehrere Scheiben aufgeklebt werden müssen und die Steuerelektronik senderseitig jede dieser Scheibe einzeln ansteuern und empfängerseitig die Empfangssignale von jeder einzelnen Scheibe ausgewertet werden müssen.

In der Patentanmeldung US 2004/0171936A1 ist ein Ultraschallsensor, der für die Messung von akustischen Laufzeiten in Flüssigkeiten vorgesehen ist. Für eine Bahnkantenerkennung ist er nicht geeignet. Bei einem solchen Ultraschallsensor bildet das Piezomaterial eine U-Form, zwischen den Schenkeln gemessen wird. Eine Trennung in Sender und Empfänger ist nicht vorgesehen.

Der Ultraschallsensor nach dem Patent US 6,289,729 B1 benutzt standardmäßige Wandlerelemente und steuert diese Wandlerelemente mit einer einzelnen, im Wesentlichen sinusförmigen Schwingung an. Der Energiegehalt einer einzelnen Sinusschwingung ist sehr gering, was dazu führt, dass der Signal-Rauschabstand bei der Nutzung von am Markt erhältlichen Ultraschallwandlern sehr gering ist. Deshalb ist es heute Stand der Technik, die Ultraschallwandler mit einem Paket an Schwingungen anzusteuern. Da viele Ultraschallwandler sehr schmalbandig sind, werden diese auch häufig mit einem Rechtecksignal angesteuert, was den Aufbau des Sendegenerators deutlich vereinfacht.

Das Patent US 5,274,573 beschreibt einen Bahnkantensensor, bei dem Veränderungen der Umgebungsbedingungen in der Messstrecke durch eine Ultraschall-Referenzstrecke erkannt werden und darüber die Parameter der Messstrecke an die Umgebungsbedingungen angepasst werden. Die dort eingesetzten Ultraschallwandler sind wieder runder Bauform, wie z.B. der dort empfohlene, frei im Handel erhältliche Typ Murata-Erie MA299A1. Bei einem Einsatz in aggressiven Umgebungsbedingungen sollen die runden Ultraschallwandler in einem schützenden Rohr eingebaut und der Schall über Reflektoren in Richtung Bahnmaterial umgelenkt werden, was wiederum den nutzbaren Messbereich sehr stark einschränkt.

Es ist die Aufgabe der vorliegenden Erfindung, eine Vorrichtung anzugeben, die ein der Lage einer Kante von verschiedensten Objekten in einer möglichst breiten Messstrecke proportionales Signal abgibt, dass für die Steuerung der Zuführung des Objektes genutzt werden kann und mit nur einem Ultraschallsende- und nur einem Empfangswandler auskommt und somit einfach und preiswert herzustellen ist.

Diese Aufgaben werden mit den Merkmalen des Anspruch 1 gelöst.
Vorteilhafte Ausgestaltungen der Erfindung sind in den Unteransprüchen angegeben.

Die Kontrolle der Kantenlage flächiger Objekte, insbesondere von Bahnen aus Papier oder Folie, erfolgt mit einer Vorrichtung, in der ein Ultraschall-Sendewandler und ein Ultraschall-Empfangswandler in einem festen Abstand gegenüberliegend zueinander angeordnet sind und eine Messstrecke bilden. Das zu kontrollierende Objekt wird durch die Messstrecke so hindurchgeführt, so dass die Fläche des Objektes senkrechte zur Messstrecke verläuft und die zu kontrollierende Kante sich in der Messstrecke befindet. Das abzutastende Objekt deckt einen Teil der Messstrecke ab, so dass weniger Schall vom Sender zum Empfänger gelangt je weiter das Objekt die Messstrecke abdeckt. Eine Steuerelektronik generiert das Sendesignal und bereitet das empfangene Ultraschallsignal auf, verarbeitet diese und gibt ein Ausgangssignal aus, das der Lage der Kante in der Messtrecke proportional ist.

Die Vorrichtung zeichnet sich dadurch aus, dass sich in dem Ultraschall-Sendewandler nur eine piezokeramische Platte in länglicher Quaderform befindet und in dem gegenüberliegenden Ultraschall-Empfangswandler nur eine piezokeramische Platte ebenfalls in länglicher Quaderform befindet. Dabei sind die piezokeramische Platten jeweils auf einer länglichen Anpassungsschicht befestigt, die die Ankopplung der Ultraschallsignale an die Luft optimiert. Zwischen dem Ultraschall-Sendewandler und dem Ultraschall-Empfangswandler bildet sich die Messtrecke in einer Breite aus, die in etwa 2/3 der Länge der Sende- und Empfangswandler entspricht.
Es hat sich gezeigt, dass mit nur einem Paar von Sende- und Empfangswandlern sich ein zur Lage der Kante in der Messstrecke proportionales Ausgangssignal ergibt, das annähernd linear ist. Bei erhöhten Anforderungen an die Genauigkeit kann das Ausgangssignal durch die Steuerung weiter linearisiert werden.

Auf die piezokeramischen Platte mit ihren rechteckigen Abmessungen wird eine Anpassungsschicht geklebt, die die Abmessungen der piezokeramischen Platte aufweist, oder zu allen vier Seiten geringfügig übersteht. Als akustisches Anpassmaterial wird ein Epoxydharz mit einem hohen Anteil an Glashohlkugeln verwendet.
Die Dicke der Anpassschichten wird so gewählt, dass sie ein Viertel der Wellenlänge der Ultraschallsignale beträgt.

Eine lineare Messtrecke kann mit einem rechteckigen Ultraschall-Sendewandler und Ultraschall-Empfangswandler ab 20 mm Länge aufgebaut werden. Praktische Versuche haben gezeigt, dass mit rechteckförmigen piezokeramischen Platten mit Abmessungen von 10 x 30 x 2 mm³ bereits ein Messbereich von bis zu 18 mm erzielt werden kann. Es wurde eine sehr lineare Kennlinie erzielt, wenn die Abmessungen der akustischen Anpassschicht ebenfalls 10 x 30 mm² betrug. Für einen noch größeren Messbereich kann auch eine rechteckförmige piezokeramische Platte mit den Abmessungen 10 x 70 x 2 mm³ verwendet werden. Durch Versuche wurde herausgefunden, dass es hier günstiger ist, wenn die akustische Anpassschicht umlaufend ca. 1 mm übersteht, also Abmessungen von 12 x 52 mm² aufweißt. Damit lassen sich Messbereiche von bis zu 35 mm erzielen. Die Dicke der akustischen Anpassschicht wurde so gewählt, dass sich eine Ultraschallfrequenz von ca. 150 kHz einstellt.

Sender und Empfänger können in einem Abstand von 20 mm bis 100 mm zueinander angeordnet sein. In der Praxis bewährt haben sich Abstände von 30 mm, 40 mm und 70 mm.

Denkbar ist es auch, rechteckförmige piezokeramische Platten mit noch größeren Abmessungen zu verwenden, um einen noch breiteren Messbereich zu erzielen. Piezokeramische Platten mit rechteckförmigen Abmessungen ist eine übliche Bauform. Natürlich ist es auch denkbar, piezokeramische Platten mit rechteckförmigen Abmessungen zu nutzen, bei denen die vier Ecken der großen Rechteckfläche abgerundet sind, gegebenenfalls sogar soweit, dass sich an den beiden kurzen Seiten des Rechtecks Halbkreise ausbilden. Entsprechend könnten auch vier Ecken der Anpassschicht abgerundet sein. Dies beeinträchtigt die Funktion der UltraschallWandler nur unwesentlich.

Die Dämpfung des Signals in der Messstrecke zwischen Ultraschall-Sendeeinheit und Ultraschall-Empfangseinheit ist nicht nur abhängig von der Lage der Kante der Materialbahn, sondern auch von der Lufttemperatur, der Luftfeuchte und dem Luftdruck. Will man die Genauigkeit der Messstrecke weiter erhöhen, kann man diese Umwelteinflüsse durch eine zusätzliche Referenzstrecke kompensieren. Diese besteht dann aus einem klein bauenden Referenz-Ultraschallsendewandler und einem Referenz-Ultraschallempfangswandler der mit einem räumlichen Abstand neben dem Ultraschall-Sendewandler und Ultraschall-Empfangswandler angeordnet ist. Die Materialbahn bewegt sich immer nur in der Messstrecke, die sich aus dem Ultraschall-Sendewandler und dem Ultraschall-Empfangswandler bildet; die Referenzstrecke bleibt immer frei vom Bahnmaterial. Dass in der Referenzstrecke gemessene Vergleichssignal wird in der Steuerelektronik herangezogen, um die Umwelteinflüsse aus Lufttemperatur, Luftfeuchtigkeit und Luftdruck in der eigentlichen Messstrecke zu kompensieren.

Um eine gute EMV-Festigkeit zu erzielen, wird die der piezokeramischen Platte zugewandten Seite des akustischen Anpassmaterials metallisiert. Wird nun die piezokeramische Platte mithilfe eines Epoxidklebers auf die metallisierte Seite des akustischen Anpassmaterials geklebt, muss dafür Sorge getragen werden, dass die Metallisierung elektrischen Kontakt mit dem Minuspol der piezokeramischen Platte hat. Bei einer hinreichenden Rauhigkeit der Metallisierung wird dies bereits durch einen entsprechend hohen Anpressdruck während des Verklebens erzielt. Ist die Rauhigkeit nicht gegeben, können zwecks elektrischer Kontaktierung auch dünne Kupferdrähte zwischen der metallisierten Anpassschicht und der piezokeramischen Platte eingelegt und mit verklebt werden. Die piezokeramische Platte ist mit zwei Drähten am Plus- und Minuspol kontaktiert. Der rechteckförmige Verbund aus akustischem Anpassmaterial und piezokeramischer Platte wird in einen Schaumstoffkörper, zum Beispiel einem weichen Polyurethanschaum, eingebettet, so dass nur die der metallisierten Seite des akustischen Anpassmaterials gegenüberliegenden Seite freiliegt.

Der Ultraschall-Sendewandler und der Ultraschall-Empfangswandler sind vorzugweise in einen gabelförmigen Halter eingesetzt. Die Messstrecke befindet sich dann zwischen den Innenseiten der beiden Schenkel des gabelförmigen Halters. In diesem gabelförmigen Halter ist auch die gesamte Steuerelektronik untergebracht.
Der Halter ist vorzugsweise aus Metall hergestellt, er kann aber auch aus Kunststoff sein. Ein typischer Abstand der Schenkel zueinander beträgt etwa 40 mm.

Das aus der Messstrecke gewonnene Ausgangssignal kann in verschiedenen Formen zur Weiterverarbeitung angeboten werden. Das Ausgangssignal kann ein der Lage der Kante proportionale Spannung zwischen 0 und 10 Volt sein. Üblich ist auch ein Stromwert zwischen 4 mA und 20 mA. Es kann aber auch ein der Lage der Kante proportionales Binärsignal sein, welches über eine standardisierte Schnittstelle, wie den CAN-Bus, ausgegeben wird.

Ausführungsformen der Erfindung sind beispielhaft in den Figuren beschrieben.
Fig. 1 zeigt perspektivisch einen Blattkantensensor.
Fig. 2 zeigt den Einbau der Ultraschallwandler in den Halter.
Fig. 3 zeigt einen Längs-Querschnitt durch einen Ultraschallwandler
Fig. 4 zeigt eine Aufsicht auf einen Ultraschallwandler
Fig. 5 zeigt ein Diagramm des Ausgangssignals abhängig von der Lage der Blattkante.

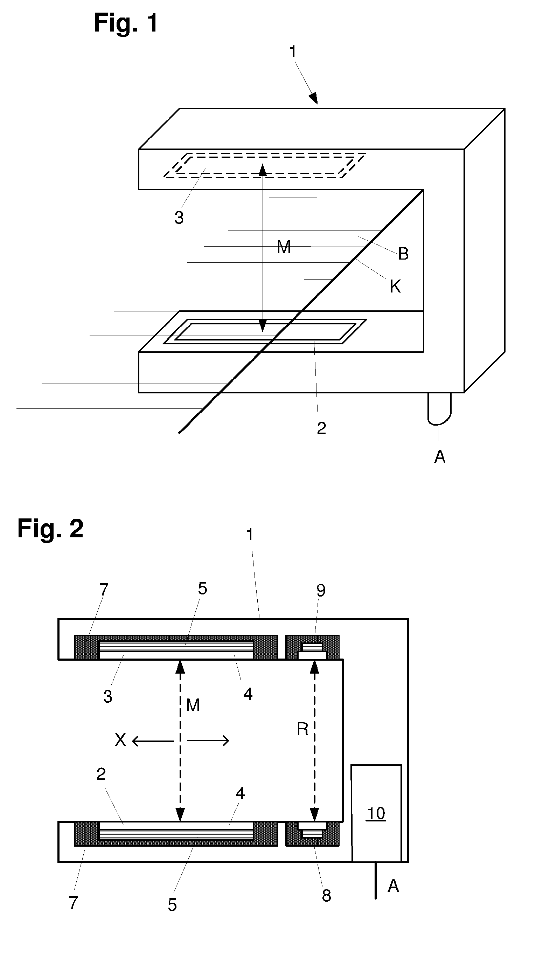

In Fig. 1 ist ein Blattkantensensor in einem gabelförmigen Halter 1 dargestellt, zwischen dessen Schenkeln sich eine Materialbahn B befindet, deren Kante K detektiert werden soll. Dazu ist in dem einen Schenkel der Ultraschall-Sendewandler 2 und in dem anderen Schenkel der Ultraschall-Empfangswandler 3 untergebracht, zwischen denen sich die Messstrecke M ausbildet.
An dem Halter 1 steht das Ausgangssignal A zur Verfügung, das der Lage der Kante K proportional ist.

In Fig. 2 ist schematisch ein Schnitt durch einen Blattkantensensor gezeigt.
In dem unteren Schenkel des Halters 1 ist die Ultraschall-Sendewandler 2 eingesetzt. Sie besteht aus der piezokeramischen Platte 5 und der Anpassungsschicht 4, die zusammen mit der Dämpfungsmasse 7 in dem unteren Schenkel gehalten werden.
In dem oberen Schenkel des Halters 1 ist der Ultraschall-Empfangswandler 3 eingesetzt. Dieser besteht ebenfalls aus der piezokeramischen Platte 5 und der Anpassungsschicht 4, die zusammen mit der Dämpfungsmasse 7 in dem oberen Schenkel gehalten werden. Zwischen dem Ultraschall-Sendewandler 2 und dem Ultraschall-Empfangswandler 3 bildet sich die Messstrecke M aus, die die Lage X eine Kante detektiert.
Parallel zu der Messstrecke M ist die optionale Referenzstrecke R dargestellt, die aus dem Referenz-Ultraschallsendewandler 8 und dem Referenz-Ultraschallempfangswandler 9 besteht, die auch jeweils in einer Dämpfungsmasse gehalten sind.
Die Steuerelektronik 10 steuert den Ultraschall-Sendewandler 2 an und wertet das Empfangssignal aus dem Ultraschall-Empfangswandler 3 aus.
Das Empfangssignal wird ggf. mittels des Referenzsignals aus der Referenzstrecke R korrigiert.
Das resultierende Signal wird als Ausgangssignal A zur Verfügung gestellt und kann für beispielsweise für Maschinensteuerungen verwendet werden.

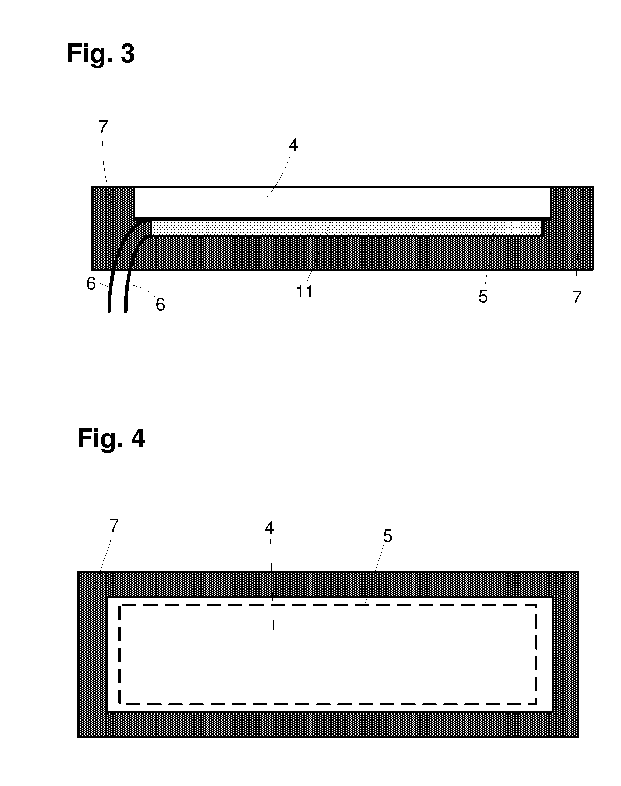

In den Figuren 3 und 4 sind ein Längs-Querschnitt und eine Aufsicht auf einen
Ultraschallwandler dargestellt. Er besteht aus einer piezokeramischen Platte 5, die unter die Anpassungsschicht 4 geklebt ist. Diese ist vorzugsweise mit einer Metallisierung 11 versehen. Die Anschlussdrähte 6 führen zur Steuerelektronik, wo die Ultraschallsignale erzeugt und ausgewertet werden.
Die Einheit aus piezokeramischer Platte 5 und Anpassungsschicht 4 ist in eine Dämpfungsmasse 7 eingebettet, über die eine Übertragung von Körperschall vermieden wird.

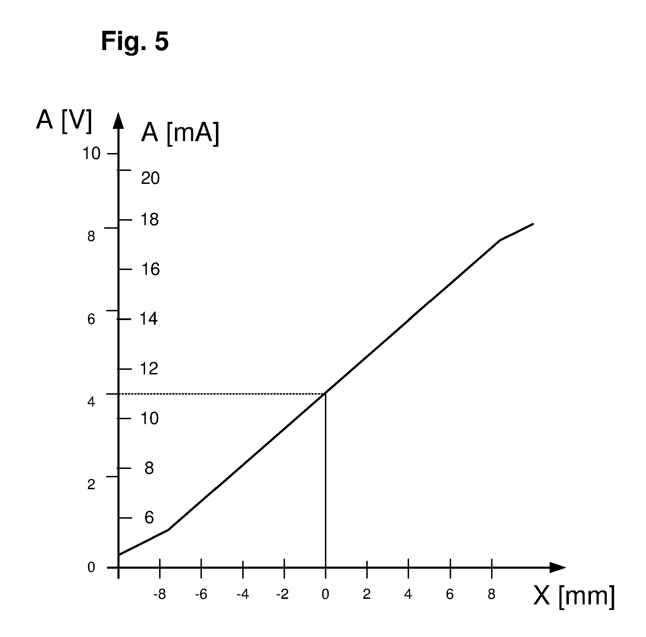

Fig.5 zeigt ein Beispiel-Diagramm des Ausgangssignal A über der Lage X einer Kante. Dieses Ausgangssignal A kann als Spannungswert vorliegen und ist zwischen einer Lage X von -9 mm bis +9 mm in etwa linear zwischen 0 V und 10 V. Wird das Ausgangssignals A als Stromwert ausgegeben, liegt dieses zwischen 4 mA und 20 mA. Bei größeren Abweichungen der Lage wird das Ausgangssignal ungenauer. Im hier gezeigten Fall liegt der Nullpunkt der Lage X bei einem Ausgangssignal A von 4 Volt oder 11 mA.

### Bezugszeichen:

- 1: Halter
- 2: Ultraschall-Sendewandler
- 3: Ultraschall-Empfangswandler
- 4: Anpassungsschicht
- 5: Piezokeramische Platte
- 6: Anschlussdrähte
- 7: Dämpfungsmasse
- 8: Referenz-Ultraschall-Sendewandler
- 9: Referenz- Ultraschall-Empfangswandler
- 10: Steuerelektronik
- 11: Metallisierung

- A: Ausgangssignal
- B: Materialbahn
- K: Kante
- M: Messstrecke
- R: Referenzstrecke
- X: Lage der Kante

## Patentansprüche

1. Vorrichtung zur Kontrolle einer Kantenlage flächiger Objekte, insbesondere von Bahnen aus Papier oder Folie, mit einem Ultraschall-Sendewandler (2) und einem Ultraschall-Empfangswandler (3), die in einem festen Abstand gegenüberliegend zueinander angeordnet sind und eine zur Fläche des Objektes senkrechte Messtrecke (M) mit Ultraschallsignalen bilden, durch die das zu kontrollierende Objekt (B) mit einer Kante (K) hindurchgeführt wird, und mit einer Steuerelektronik (10), die die Ultraschallsignale der Messstrecke (M) verarbeitet und ein Ausgangssignal (A) ausgibt,
das der Lage der Kante (K) in der Messstrecke proportional ist, **dadurch gekennzeichnet,**
**dass** sich in dem Ultraschall-Sendewandler (2) nur eine piezokeramische Platte (5) in länglicher Quaderform befindet und in der gegenüberliegenden Ultraschall-Empfangswandler (3) nur eine piezokeramische Platte (5) ebenfalls in länglicher Quaderform befindet, wobei die piezokeramischen Platten (5) auf länglichen Anpassungsschichten (4) zur akustischen Anpassung an die Luft befestigt sind.

2. Vorrichtung nach Anspruch 1, **dadurch gekennzeichnet,**
**dass** der Ultraschall-Sendewandler (2) und der Ultraschall-Empfangswandler (3) jeweils ein Länge von ca. 20 mm bis 70 mm besitzen.

3. Vorrichtung nach Anspruch 1 oder 2, **dadurch gekennzeichnet, dass**
die Anpassungsschicht (4) die Abmessungen der piezokeramischen Platte aufweist, oder zu allen vier Seiten geringfügig übersteht.

4. Vorrichtung nach Anspruch 1, **dadurch gekennzeichnet, dass**
die Anpassungsschichten (4) eine Dicke von einem Viertel der Wellenlänge der Ultraschallsignale besitzen.

5. Vorrichtung nach Anspruch 1, **dadurch gekennzeichnet, dass**
die Anpassungsschichten (4) eine Platte aus Epoxydharz mit Glasanteilen ist.

6. Vorrichtung nach Anspruch 1, **dadurch gekennzeichnet, dass**
der Ultraschall-Sendewandler (2) und der Ultraschall-Empfangswandler (3) in eine Dämpfungsmasse (7) eingebettet sind.

7. Vorrichtung nach Anspruch 1, **dadurch gekennzeichnet, dass** Ultraschall-Sendewandler (2) und die Ultraschall-Empfangswandler (3) in den Schenkeln eines gabelförmigen Halters (1) untergebracht sind.

8. Vorrichtung nach Anspruch 7, **dadurch gekennzeichnet,**
**dass** der Abstand der Schenkel etwa 40 mm beträgt.

9. Vorrichtung nach Anspruch 7, **dadurch gekennzeichnet,**
**dass** in dem Halter (1) neben der Messtrecke (M) noch eine Referenzstrecke (R) aus einem Referenz-Ultraschall-Sendewandler (8) und einem Referenz-Ultraschall-Empfangswandler (9) eingebaut ist.

10. Vorrichtung nach Anspruch 1, **dadurch gekennzeichnet,**
**dass** das Ausgangssignal (A) eine der Lage der Kante (K) proportionale Spannung zwischen 0 und 10 Volt und/oder ein proportionaler Strom zwischen 4 und 20 mA ist.

11. Vorrichtung nach Anspruch 1, **dadurch gekennzeichnet,**
**dass** das Ausgangssignal (A) eine der Lage der Kante (K) proportionales Binärsignal ist, welches über eine standardisierte Schnittstelle wie CAN-Bus ausgegeben wird.

## Claims

1. Device for determining the edge position of flat objects, in particular strips of paper or foil, with an ultrasound transmitter transducer (2) and an ultrasound receiver transducer (3) arranged at a set distance opposing one another and forming a measuring path (M) perpendicular to the surface of the object with ultrasound signals, via which path an edge (K) of the object (B) to be controlled is moved, and with control electronics (10) which process the ultrasound signals from the measuring path (M) and emit an output signal (A) proportional to the position of the edge (K) on the measuring path, **characterised in that**
only one piezoceramic plate (5) of longitudinal cuboid form is located in the ultrasound transmitter transducer (2) and only one piezoceramic plate (5) also of longitudinal cuboid form is located in the opposing ultrasound receiver transducer (3), the piezoceramic plates (5) being fixed on longitudinal adaption layers (4) for acoustic adaptation to the air.

2. Device according to claim 1, **characterised in that**
the ultrasound transmitter transducer (2) and the ultrasound receiver transducer (3) are each approximately 20 mm to 70 mm in length.

3. Device according to claim 1 or claim 2, **characterised in that**
the adaption layer (4) has the measurements of the piezoceramic plate or slightly overlaps it on all four sides.

4. Device according to claim 1, **characterised in that**
the adaption layers (4) have a thickness of one quarter of the wave length of the ultrasound signals.

5. Device according to claim 1, **characterised in that**
the adaption layer (4) is a plate consisting of epoxy resin with glass content.

6. Device according to claim 1, **characterised in that**
the ultrasound transmitter transducer (2) and the ultrasound receiver transducer (3) are embedded in a damping compound (7).

7. Device according to claim 1, **characterised in that**
the ultrasound transmitter transducer (2) and the ultrasound receiver transducer (3) are accommodated in the legs of a fork-shaped holder (1).

8. Device according to claim 7, **characterised in that**
the legs are spaced about 40 mm apart.

9. Device according to claim 7, **characterised in that**
a reference path (R) comprising a reference ultrasound transmitter transducer (8) and a reference ultrasound receiver transducer (9) is also installed in the holder (1) adjacent to the measuring path (M).

10. Device according to claim 1, **characterised in that**
the output signal (A) has a voltage between 0 and 10 volts proportional to the position of the edge (K) and/or a proportional current between 4 and 20 mA.

11. Device according to claim 1, **characterised in that**
the output signal (A) is a binary signal proportional to the position of the edge (K) which is emitted via a standardised interface such as a CAN bus.

## Revendications

1. Dispositif de contrôle d'une position des bords d'objets plats, en particulier de bandes de papier ou de feuille, comportant un transducteur ultrasonore d'émission (2) et un transducteur ultrasonore de réception (3), qui sont disposés opposés l'un à l'autre à une distance fixe et qui forment une section de mesure (M) perpendiculaire à la surface de l'objet avec des signaux ultrasonores, que l'objet à contrôler (B) traverse avec un bord (K), et comportant un système électronique de commande (10), qui traite les signaux ultrasonores de la section de mesure (M) et émet un signal de sortie (A), qui est proportionnel à la position du bord (K) dans la section de mesure, **caractérisé en ce que**,
dans le transducteur ultrasonore d'émission (2), se trouve uniquement une plaque piézocéramique (5) en forme de parallélépipède allongé et, dans le transducteur ultrasonore de réception (3) opposé, se trouve uniquement une plaque piézocéramique (5) également en forme de parallélépipède allongé, les plaques piézocéramiques (5) étant fixées sur des couches d'adaptation (4) pour l'adaptation acoustique à l'air.

2. Dispositif selon la revendication 1, **caractérisé en ce que**
le transducteur ultrasonore d'émission (2) et le transducteur ultrasonore de réception (3) ont respectivement une longueur d'environ 20 mm à 70 mm.

3. Dispositif selon la revendication 1 ou 2, **caractérisé en ce que**
la couche d'adaptation (4) présente les dimensions de la plaque piézocéramique, ou la dépasse légèrement des quatre côtés.

4. Dispositif selon la revendication 1, **caractérisé en ce que**
les couches d'adaptation (4) ont une épaisseur égale à un quart de la longueur d'onde des signaux ultrasonores.

5. Dispositif selon la revendication 1, **caractérisé en ce que**
les couches d'adaptation (4) sont une plaque en résine époxyde contenant du verre.

6. Dispositif selon la revendication 1, **caractérisé en ce que**
le transducteur ultrasonore d'émission (2) et le transducteur ultrasonore de réception (3) sont incorporés dans une matière d'amortissement (7).

7. Dispositif selon la revendication 1, **caractérisé en ce que**
le transducteur ultrasonore d'émission (2) et le transducteur ultrasonore de réception (3) sont logés dans les branches d'un support (1) en forme de fourche.

8. Dispositif selon la revendication 7, **caractérisé en ce que**
l'écartement des branches est d'environ 40 mm.

9. Dispositif selon la revendication 7, **caractérisé en ce que**
une section de référence (R) constituée d'un transducteur ultrasonore d'émission de référence (8) et d'un transducteur ultrasonore de réception de référence (9) est également installée dans le support (1) à côté de la section de mesure (M).

10. Dispositif selon la revendication 1, **caractérisé en ce que**
le signal de sortie (A) est une tension proportionnelle à la position du bord (K) comprise entre 0 et 10 volts et/ou un courant proportionnel compris entre 4 et 20 mA.

11. Dispositif selon la revendication 1, **caractérisé en ce que**
le signal de sortie (A) est un signal binaire proportionnel à la position du bord (K), qui est émis par le biais d'une interface standard comme un bus CAN.
